# EUROPEAN PATENT APPLICATION

(11) **EP 2 317 421 A2**
(43) Date of publication of application: **04.05.2011**
(21) Application number: 10189224.8
(22) Date of filing: 28.10.2010
(51) Int. Cl.: G06F 3/045

(54) **Display filter having touch input function**

(30) Priority: 30.10.2009 KR 20090103885
(71) Applicant: Samsung Corning Precision Materials Co., Ltd., Gyeongsangbuk-do 730-735 (KR)
(72) Inventor: Lim, Jin Sung, 336-841, ChungCheongNam-Do (KR); Park, Dae Chul, 336-841, ChungCheongNam-Do (KR); Kim, Hong Ik, 336-841, ChungCheongNam-Do (KR); Kim, Shin Wook, 336-841, ChungCheongNam-Do (KR); Kim, Ho Woo, 336-841, ChungCheongNam-Do (KR)
(74) Representative: Gulde Hengelhaupt Ziebig & Schneider

(57) **Abstract**

A display filter having a touch input function includes a base substrate, a conductive film coating layer formed on the base substrate, and a touch sheet. The touch sheet and the conductive film coating layer are arranged with an air gap therebetween, and are in contact with each other in response to a touch pressure. A first electrode is formed on a surface of the touch sheet that faces the conductive film coating layer. The first electrode includes a first electrode part to which a first input voltage is applied to generate potential distribution in the x direction, and a second electrode part to which a second input voltage is applied to generate potential distribution in the y direction. A second electrode is formed on the periphery of the conductive film coating layer, and allows electrical current to flow through when the touch sheet is in contact with the conductive film coating layer.

## Description

### CROSS REFERENCE TO RELATED APPLICATION

The present application claims priority from Korean Patent Application Number 10-2009-0103885 filed on October 30, 2009, the entire contents of which application are incorporated herein for all purposes by this reference.

### BACKGROUND OF THE INVENTION

### Field of the Invention

The present invention relates to a display filter, and more particularly, to a display filter in which information can be input by a touch operation.

### Description of Related Art

In response to the advent of the information society, a variety of types of display devices has been developed. As examples of such display devices, a Liquid Crystal Display (LCD), a Plasma Display Panel (PDP), an Electro Luminescent Display (ELD) and the like have been developed.

The LCD, one example of the display device, is manufactured by forming an array substrate through an array substrate fabrication process, in which Thin Film Transistors (TFTs) and pixel electrodes are formed, by forming a color filter substrate through a color filter substrate fabrication process, in which a color filter and common electrodes are formed, and by interposing liquid crystal between the two substrates through a liquid cell process.

The PDP, another example of such a display device, emits light by generating an electric discharge in the gas between electrodes using a direct or alternating voltage applied to the electrodes and then activating fluorescent materials using Ultraviolet (UV) radiation resulting from the gas discharge,

However, due to these operating characteristics, the PDP has drawbacks, such as a large amount of electromagnetic radiation and Near-Infrared (NIR) radiation emitted therefrom, high surface reflection of the fluorescent materials, and orange light emitted from the gas contained therein, such as He or Xe, worsening color purity. In addition, electromagnetic radiation and NIR radiation are harmful to the human body and may cause precision devices, such as mobile phones and remote controls, to malfunction.

Therefore, there is a demand to reduce the emission of electromagnetic radiation and NIR radiation from the PDP to a certain value or less. For this, the PDP uses a filter, which has a variety of functions, such as electromagnetic radiation blocking, NIR radiation blocking, prevention of reflection of external light, or color purity improvement, in order to block electromagnetic radiation and NIR radiation, reduce the reflection of light, and improve color purity.

Recently, the display device is advancing beyond a device that provides one-way transmission of information. The display device provided with an input unit can realize interactive, communication, so that the user can personally input information using the display device. The user inputs information using a remote control while watching a display screen, or the user inputs information by touching a touch input unit disposed on the surface of the display device.

At present, in a large sized display device, the touch input unit is provided separately from the display device and is attached to the surface of the display device. However, in this case, the touch sensitivity is bad and the display device becomes thicker. In addition, the touch input unit tends to come off the display device when used for a long time.

In addition, if the LCD is used outdoors, there are problems in that, for example, the sunlight raises the temperature inside a display device, and in that noise such as UV radiation causes liquid crystals to malfunction, for example, through phase transition.

The information disclosed in this Background of the Invention section is only for the enhancement of understanding of the background of the invention, and should not be taken as an acknowledgment or any form of suggestion that this information forms a prior art that would already be known to a person skilled in the art.

### BRIEF SUMMARY OF THE INVENTION

Various aspects of the present invention provide a display filter that can function as both a filter and a touch input unit.

Also provided is a display filter that can minimize the thickness of the display filter even when the display filter is provided with a touch input function.

Also provided is a display filter that can block both Ultraviolet (UV) radiation and Infrared (IR) radiation, which would otherwise have a deleterious effect on the display filter, when a display device is installed outdoors.

Also provided is a display filter that can have functions of color correction, UV radiation blocking and IR radiation blocking.

In an aspect of the present invention, the display filter includes a base substrate, a conductive film coating layer formed on the base substrate, and a touch sheet. The touch sheet and the conductive film coating layer are arranged with an air gap therebetween such that the touch sheet is brought into contact with the conductive film coating layer in response to a touch pressure applied from the outside. A first electrode is formed on a surface of the touch sheet that faces the conductive film coating layer. The first electrode includes a first electrode part to which a first input voltage, is applied to generate potential distribution in an x direction and a second electrode part to which a second input voltage is applied to generate potential distribution in a y direction. A second electrode is formed on a peripheral portion of the conductive film coating layer. The second electrode allows electrical current to flow through when the touch sheet is brought into contact with the conductive film coating layer. Thereby, information input is enabled by touching the touch sheet,

In an exemplary embodiment of the display filter, the second electrode may be a grounding electrode that grounds the conductive film coating layer. Here, the grounding electrode may be formed as a piece of Cu tape.

In an exemplary embodiment of the display filter, the conductive film coating layer may be an electromagnetic radiation shielding layer, The electromagnetic radiation shielding layer includes at least one high-refractivity metal oxide layer and at least one metal layer laminated, on each other.

In the display filter according to exemplary embodiments of the invention, there are advantages in that both a filter function, and a touch input function can be Performed.

In addition, the display filter according to exemplary embodiments of the invention does not requite additional materials for the formation of the second electrode, since the grounding electrode to ground the conductive film coating layer can function as the second electrode, so that manufacturing costs can be advantageously reduced.

Furthermore, in the display filter according to exemplary embodiments of the invention, the conductive film coating layer is formed as an electromagnetic radiation shielding layer in which the high-refractivity metal oxide layer and the metal layer are laminated on each other. With this configuration, the conductive film coating layer, can perform both a touch input function and an electromagnetic radiation shielding function, thereby minimizing the thickness of the filter. Moreover, since the conductive film coating layer is formed by laminating the high-refractivity metal oxide layer and the metal layer on each other, it can advantageously block Near-Infrared (NIR) radiation and UV or IR radiation, which would otherwise have a deleterious effect on the display filter.

The methods and apparatuses of the present invention have other features and advantages which will be apparent from, or are set forth in more detail in the accompanying drawings, which are incorporated herein, and in the following Detailed Description of the Invention, which together serve to explain certain principles of the present invention.

### BRIEF DESCRIPTION OF THE DRAWINGS

FIG. 1 is a schematic illustration of the structure of a display device to which a display filter according to an exemplary embodiment of the invention is applied;

FIG. 2 is an illustration of a touch sheet and a conductive film coating layer of the display filter according to the exemplary embodiment of the invention;

FIG. 3 is an illustration explaining the principle by which a touch position is detected in the display filter according to the exemplary embodiment of the invention; and

FIGS. 4A and 4B are illustrations explaining a process by which a touch position is detected in the display filter according to the exemplary embodiment of the invention when the touch sheet and the conductive film coating layer are in contact.

### DETAILED DESCRIPTION OF THE INVENTION

Reference will now be made in detail to various embodiments of the present invention, examples of which are illustrated in the accompanying drawings and described below. While the invention will be described in conjunction with exemplary embodiments, it will be understood that the present description is not intended to limit the invention to those exemplary embodiments. On the contrary, the invention is intended to cover not only the exemplary embodiments, but also various alternatives, modifications, equivalents and other embodiments that may be included within the spirit and scope of the invention as defined by the appended claims,

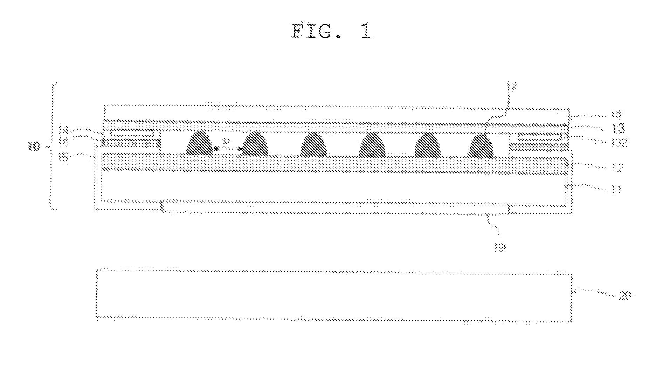

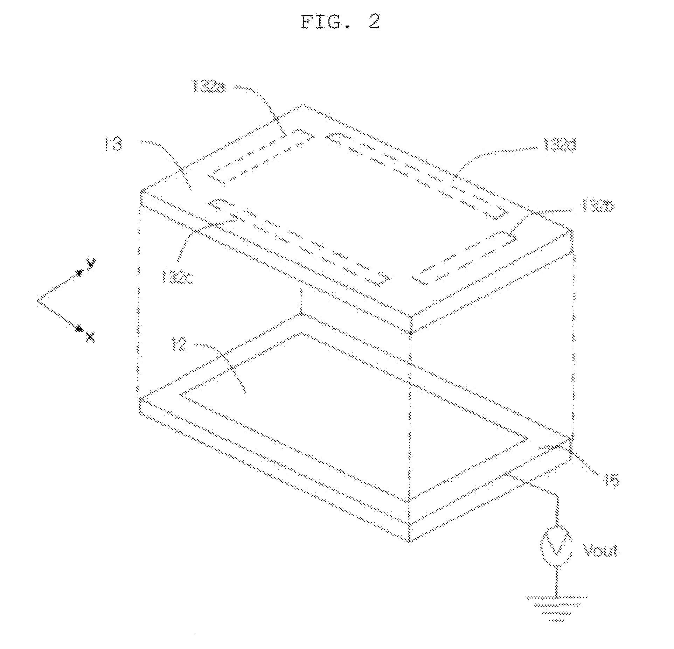

FIG. 1 is a schematic illustration of the structure of a display device to which a display filter according to an exemplary embodiment of the invention is applied, and FIG. 2 is an illustration of a touch sheet and a conductive film coating layer of the display filter according to the exemplary embodiment of the invention.

As shown in FIGS. 1 and 2, the display device is a Plasma Display Panel (PDP), and includes a display filter 10 and a plasma display module 20.

The plasma display module 20 has discharge cells defined between the first and second substrates. A fluorescent material is applied on the inner surface of each of the first and second substrates, and the discharge cells are filled with a mixture gas of neon (Ne) and xenon (Xe). When a strong electric field, which is caused by electrical current flowing through the first and second substrates, is applied to the discharge cells, Ultraviolet (UV) rays emitted from the mixture gas collide with the fluorescent material, thereby radiating visible lights electromagnetic radiation, Near-Infrared (NIR) radiation, and orange light, which lowers color purity. As shown in FIG. 1, the display filter 10 according to this embodiment, which is applied to the PDP, is disposed in front of the plasma display module 20.

Now referring to FIG. 1, the display filter 10 of this embodiment generally includes a base substrate 11, a conductive film coating layer 12, and a touch sheet 13.

The base substrate 11 serves to protect a display module 19 that display image, and can be made of tempered or heat-strengthened glass or transparent polymer resin. When the base substrate 11 is made of glass, it is preferred that the glass have high transparency, for example, a visible light transmissivity of 80% or more and high heat resistance, for example, a transition temperature of 50°C or more. Examples of the polymer resin may include Polyethylene Terephthalate (PET), acryl, Polycarbonate (PC), Urethane Acrylate (UA), Epoxy Acrylate (EA), Brominate Acrylate (BA), Polyvinyl Chloride (PVC), and the like.

The conductive film coating layer 12 is formed on the base substrate 11. The conductive film coating layer 12 can be formed, by way of example, as a multi-layered transparent conductive film in which high-refractivity metal oxide layers and metal layers are alternately laminated using a deposition process such as sputtering. In an example, the metal layer can be a thin film made of Ag or an Ag alloy. In particular, Ag is widely used since it exhibits excellent conductivity and IR reflectivity, as well as excellent visible light transmissivity even when multiple metal layers are layered. However, since Ag has low chemical/physical stability and is deteriorated by pollutants, vapor, heat, light, or the like from the surrounding environment, it is preferred to use an alloy containing at least one of metals, such as Au, Pt, Pd, Cu, In, Sn, and the like. The high-refractivity metal oxide layers can be made of Indium Tin Oxide (ITO), zinc oxide (ZnO), tin oxide (SnO₂), Niobium Pentoxide (Nb₂O₅), or the like. When the conductive film coating layer 12 is formed as a multi-layered transparent conductive film, it has the function of blocking electromagnetic radiation, NIR radiation, and UV radiation.

The touch sheet 13 is arranged facing the conductive film coating layer 12 with an air gap therebetween, so that it is brought into contact with the conductive film coating layer 12 in response to a touch pressure applied from the outside. Although not shown, the touch sheet 13 may include a transparent film and a conductive layer laminated on the transparent film.

The transparent film can be made of an elastic resin material that can return to its original position when it becomes free from the touch, such as PET. The conductive layer can be made of a conductive material, such as ITO.

Now referring to FIG. 2, the first electrode 132 will be described.

As shown in FIG. 2, the first electrode 132 of this embodiment is formed on a surface of the touch sheet 13 which faces the conductive film coating layer 12. The first electrode 132 includes first electrode parts. 132a and 132b and second electrode parts 132c and 132d on the touch sheet 13. A first input voltage is applied through connected electrical lines (not shown) to the first electrode parts 132a and 132b to generate potential distribution in the x direction. A second input voltage is applied through connected electrical lines (not shown) to the second electrode parts 132c and 132d to generate potential distribution in the y direction.

Returning to FIG. 1, the display filter 10 of this embodiment includes an insulating film layer 14 and a second electrode 15. The insulating film layer 14 is formed on the first electrode 132 such that the first electrode 132 is covered with an insulating material.

The second electrode 15 is formed on the periphery of the conductive film coating layer 12. When the touch sheet 13 is brought into contact with the conductive film coating layer 12, the second electrode 15 allows electrical current to flow through connected electrical lines (not shown) to a controller (not shown), which calculates a touch position.

In one exemplary embodiments the second electrode 15 can be formed as a grounding electrode which grounds the conductive film coating layer 12. Typically, the display filter used in the PDP includes an electromagnetic radiation shielding layer in order to block electromagnetic radiation emitted from the plasma display module 20. The display filter uses a grounding electrode in order to discharge electrical current filtered by the electromagnetic radiation shielding layer to the ground. In the display filter of this embodiment, the second electrode 15 is formed as the grounding electrode which grounds the conductive film coating layer 12. Therefore, no additional material is required for the second electrode 15, thereby reducing manufacturing costs. In an example, the grounding electrode can be realized in the form of a piece of Cu or Al tape.

Although not shown in FIG. 1, the display filter 10 of this embodiment can include a controller which calculates a touch position on the surface of the touch sheet 13 using electrical current, input from the second electrode 15. In an example, the controller can include a resistance element for current-detecting, a current-voltage converting circuit which converts current into voltage, a noise-removing circuit, a filtering circuit, an analog-digital converter, and a microprocessor.

In the display filter 10 of this embodiment, the touch sheet 13 and the conductive film coating layer 12, which is formed on the base substrate 11, can be separately prepared, and then fixed to each other via an adhesive layer 16. In an example, the adhesive layer 16 can be prepared using at least one selected from among acrylic adhesive, silicon-based adhesive, urethane-based adhesive, Polyvinyl Butyral. (PVB)-based adhesive, Ethylene-Vinyl acetate (EVA)-based adhesive, Polyvinyl Ether (PVE), saturated amorphous polyester, melamine resin, or the like.

A plurality of dot spacers 17 can be disposed on the surface of the conductive film coating layer 12 which faces the touch sheet 13. The dot spacers 17 maintain the interval between the touch sheet 13 and the conductive film coating layer 12, and prevent scratches through friction against the conductive film coating layer 12 when the touch sheet 13 is pushed. In an example, the dot spacers 17 have a pitch P ranging from 1.0 to 3.0mm and a diameter of about 50 to 100µm.

The display filter 10 of this embodiment can also include an antireflection layer 18, which is formed on the touch sheet 13 to prevent external light from being reflected from the touch sheet 13. The antireflection layer 18 can be a single-layered film having an optical film thickness of, for example, 1/4 of a wavelength. This type of an antireflection layer 18 can be a thin film made of a material having a low refractive index of 1.5 or less, and preferably, 1.4 or less. The material of antireflection layer 18 can be selected from among transparent fluorine-based polymer resin, magnesium fluoride, silicon-based resin, silicon oxide, and the like. In addition, antireflection layer 18 can have a multilayer structure that includes two or more layers of thin films having different refractive indices, which can be made of an inorganic compound, such as metal oxide, fluoride silicide, boride, carbide, nitride, sulfide, or the like, or an organic compound, such as silicon-based resin, acrylic resin, fluorine-based resin, or the like.

The display filter 10 of this embodiment can also include a color correction layer 19, which is formed on the base substrate 11 and serves to increase the color reproduction range. The color correction layer 19 contains at least one of a color-adjusting colorant and a neon-cut colorant. Examples of the colorants may include anthraquinone-based colorants, cyanine-based colorants, azo-based colorants, styryl-based colorants, phthalocyanine-based colorants, methane-based, colorants, and mixtures thereof. The type and concentration of the colorants are not limited to specific dimensions, since they are determined by the absorption wavelength, absorption coefficient, and transmittance characteristics required for a display. The color correction layer 19 can also contain an NIR-blocking colorant.

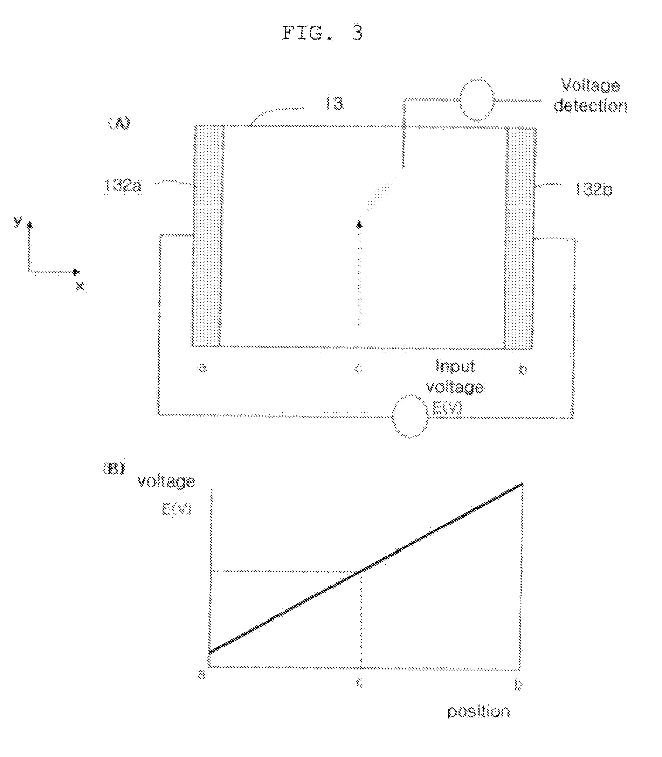

FIG. 3 is an illustration explaining the principle by which a touch position is detected in the display filter according to the exemplary embodiment of the invention.

First, referring to part (A) of FIG. 3, when a voltage is applied to electrode parts 132a and 132b, which are disposed parallel to each other on the opposite peripheries of the touch sheet 13, a potential distribution is created between the electrode parts 132a and 132b. Assuming that the resistance of the touch sheet 13 is uniform, the potential distribution can be linear, and the relationship between the distance and the potential can be expressed using a linear relation, as shown in the part (B) of FIG. 2. It is possible calculate a position along the x axis by inputting a voltage to the electrode parts 132a and 132b, detecting a voltage on a contact point, for example, a. point c, and converting the voltage on the contact point into a digital value using an A/D converter.

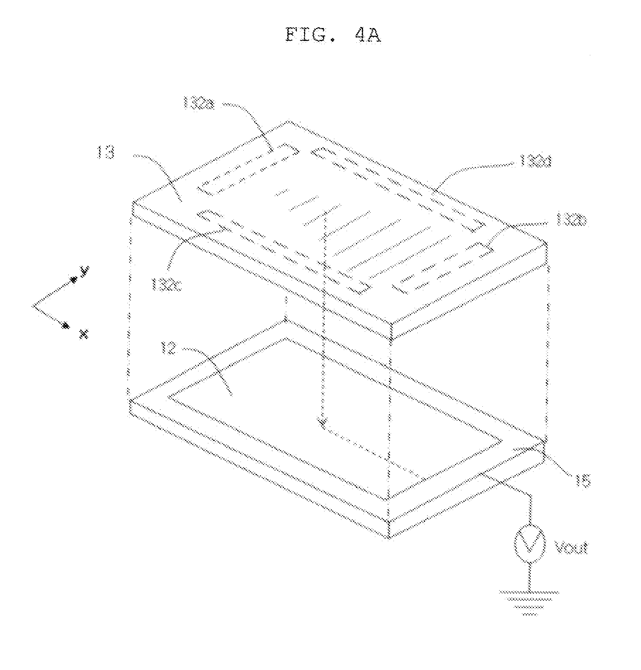

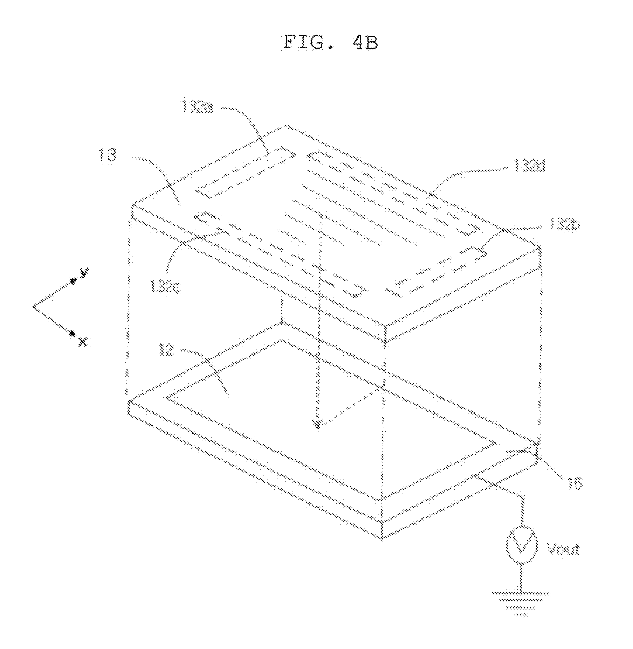

FIGS. 4A and 4B are illustrations explaining the process by which a touch position is detected in the display filter according to the exemplary embodiment of the invention when the touch sheet 13 and the conductive film coating layer 12 are in contact with each other.

As shown in FIGS. 4A and 4B first electrode parts 132a and 132b and second electrode parts 132c and 132d are formed on the surface of the touch sheet 13 which faces the conductive film coating layer 12. A first input voltage is applied through connected electrical lines (not shown) to the first electrode parts 132a and 132b to generate potential distribution in the x direction over the touch sheet 13. A second input voltage is applied through connected electrical lines (not shown) to the second electrode parts 132c and 132d to generate potential distribution in the y direction over the touch sheet 13.

In FIG. 4A, the voltage is applied to the first electrode parts 132a and 132b, and in FIG. 4B, the voltage is applied to the second, electrode parts 132c and 132d. When the touch sheet 13 is in contact with the conductive film coating layer 12, it allows electrical current to flow through the second electrode 15, which is formed on the periphery of the conductive film coating layer 12. Here, the second electrode 15 allows the electrical current to flow through connected electrical lines (not shown) to a controller (not shown) which calculates a touch position.

In FIG. 4A, a voltage is applied to the first electrode parts 132a, 132b, the second electrode 15 detects a voltage on a contact point, and then the controller calculates the position along the x axis by converting the detected voltage into a digital value using an A/D converter.

In FIG. 4B, a voltage is applied to the second electrode parts 132c, 132d, the second electrode 15 detects a voltage on the contact point, and then the controller calculates the position along the y axis by converting the detected voltage into a digital value using the A/D converter.

Although only the PDP has been described herein as the display device to which the display filter according to exemplary embodiments of the invention is applied the display device to which the display filter according to exemplary embodiments of the invention is applied is not limited thereto. Rather, the display filter according to exemplary embodiments of the invention can also be applied to a Liquid Crystal Display (LCD), an Organic Light-Emitting Display (OLED), a Digital Information Display (DTD), or the like.

The foregoing descriptions of specific exemplary embodiments of the present invention have been presented for the purposes of illustration and description. They are not intended to be exhaustive or to limit the invention to the precise forms disclosed, and obviously many modifications and variations are possible in light of the above teachings. The exemplary embodiments ware chosen and described in order to explain certain principles of the invention and their practical application, to thereby enable others skilled in the art to make and utilize various exemplary embodiments of the present invention., as well as various alternatives and modifications thereof. It is intended that the scope of the invention be defined by the Claims appended hereto and their equivalents.

## Claims

1. A display filter, comprising:
a base substrate;
a conductive film coating layer formed on the base substrate;
a touch sheet, wherein the touch sheet and the conductive film coating layer are arranged with an air gap therebetween such that the touch sheet is brought into contact with the conductive film coating layer in response to a touch pressure applied from outside;
a first electrode formed on a surface of the touch sheet that faces the conductive film coating layer, wherein the first electrode includes a first electrode part to which a first input voltage is applied to generate potential distribution in an x direction and a second electrode part to which a second input voltage is applied to generate potential distribution in a y direction; and
a second electrode formed on a peripheral portion of the conductive film coating layer, wherein the second electrode allows electrical current to flow through when the touch sheet is brought into contact with the conductive film coating layer,
whereby information input is enabled by touching of the touch sheet.

2. The display filter according to claim 1, wherein the second electrode is a grounding electrode which grounds the conductive film coating layer.

3. The display filter according to claim 2, wherein the grounding electrode is one of a piece of Cu tape and a piece of Al tape.

4. The display filter according to claim 1, wherein a number of dot spacers is disposed between the conductive film coating layer and the touch sheet.

5. The display filter according to claim 1, wherein the conductive film coating layer is an electromagnetic radiation shielding layer, wherein the electromagnetic radiation shielding layer includes at least one high-refractivity metal oxide layer and at least one metal layer laminated on each other.

6. The display filter according to claim 1, wherein the touch sheet is an indium tin oxide film.

7. The display filter according to claim 1, further comprising an insulating film layer formed on the first electrode such that the first electrode is covered with the insulating film.

8. The display filter according to claim 1, further comprising an antireflection layer formed on the touch sheet, wherein the antireflection layer prevents external light from being deflected from the touch sheets

9. The display filter according to claim 1, further comprising a color correction layer formed on the base substrate, wherein the color correction layer comprises at least one of a color-adjusting colorant and a neon-cut colorant.

10. The display filter according to claim 1, wherein the first electrode is formed on a peripheral portion of the touch sheet.
